# EUROPEAN PATENT APPLICATION

(11) **EP 4 806 557 A1**
(43) Date of publication of application: **16.09.2026**
(21) Application number: 25193277.8
(22) Date of filing: 31.07.2025
(51) Int. Cl.: B05B 3/16, B05B 1/20, B05B 3/06, B05B 12/34, B05B 17/08

(54) **WATER SPRAYER**

(30) Priority: 11.03.2025 CN 202510280701
(71) Applicant: CIXI TIAN SHUO INDUSTRY TRADE CO., LTD., Cixi Zhejiang (CN)
(72) Inventor: SHEN, Kai, Cixi (CN)
(74) Representative: Chung, Hoi Kan

(57) **Abstract**

Provided is a water sprayer, including a water spray pipe detachably connected to a water outlet end of a water source. A spray head is connected to an upper end of the water spray pipe, and an opening and closing assembly matched with the water spray pipe for upward and downward linked opening and closing is connected to an outer wall of the water spray pipe in a matched manner. The outer wall of the water spray pipe is provided with a plurality of guide grooves facilitating upward and downward movement opening and closing of the opening and closing assembly, and the opening and closing assembly includes a guide assembly connected to the guide grooves in a matched manner.

## Description

### TECHNICAL FIELD

This disclosure relates to the technical field of dynamic water spraying, and in particular, to a water sprayer.

### BACKGROUND

With the continuous progress of science and technology, new technologies are more and more widely applied in modern agriculture and garden engineering and have achieved remarkable results. In the case of an increasing shortage of water for human survival, the development of irrigation systems is becoming more and more urgent. At present, the spray heads of the existing water spray irrigation devices are of fixed structures and are generally exposed to the outside, which is not conducive to the protection of the spray heads. In addition, the structures of the water spray irrigation devices are relatively simple and lack aesthetics.

In view of the above defects, in the prior art, the spray head is disposed as a structure that can rotate up and down to spray water, and a petal structure that can be opened and closed is disposed outside the spray head. However, only when subjected to water pressure, this type of spray head can rotate upward to spray water, and the petals can be opened; and only when water spraying is stopped, the spray head can automatically move downward, and the petals can only be reset and closed under the action of the spring. In this way, the spray head cannot rotate upward and downward to spray water, and the spray head and the petals cannot be linked upward and downward. Therefore, the structures of this type of spray head and petals are relatively complex and unreasonable, and the water spray effect is poor.

### SUMMARY

In view of defects in the prior art, a purpose of this disclosure is to provide a water sprayer, which can enable a spray head to always rotate to spray water while enabling a petal to move upward and downward in a linked manner for opening and closing. A structure is simple and reasonable, and a dynamic water spray effect can be provided, thereby improving an ornamental value.

To achieve the purpose, this disclosure adopts the following technical solution:

A water sprayer, including a water spray pipe detachably connected to a water outlet end of a water source, where a spray head is connected to an upper end of the water spray pipe, an opening and closing assembly matched with the water spray pipe for upward and downward linked opening and closing is connected to an outer wall of the water spray pipe in a matched manner, the outer wall of the water spray pipe is provided with a plurality of guide grooves facilitating upward and downward movement opening and closing of the opening and closing assembly, and the opening and closing assembly includes a guide assembly connected to the guide grooves in a matched manner.

As a further optimization for the above technical solution: the opening and closing assembly further includes an opening and closing base connected to the outer wall of the water spray pipe, at least three pivot joints are uniformly arranged on an outer wall of the opening and closing base, each pivot joint is movably connected to an opening and closing body through a pivot shaft, an opening and closing cover is disposed outside the opening and closing base and the opening and closing body, and a lower end of the opening and closing cover is threadedly connected to the water outlet end of the water source.

As a further optimization for the above technical solution: the guide assembly includes a guide hole formed between two adjacent pivot joints, a guide sleeve is disposed in the guide hole, an arc-shaped guide piece connected to the guide grooves in a matched manner is disposed on an inner wall of the guide sleeve, and an outer end of the guide hole is detachably connected to a pressing cap configured to fixedly press the guide sleeve to prevent the arc-shaped guide piece from moving backward.

As a further optimization for the above technical solution: two groups of staggered guide block groups are formed on the outer wall of the water spray pipe, each group of guide block groups includes a plurality of guide blocks, each guide block is of a structure that gradually widens from two ends to a middle portion, the guide grooves are formed between two adjacent guide blocks and between the guide block and two ends of the water spray pipe, and a sealing ring connected to the water outlet end of the water source in a sealing manner is sleeved at a bottom end of the water spray pipe.

As a further optimization for the above technical solution: the opening and closing body is of a petal shape, a leaf shape, or a wing shape, and an inner wall of the opening and closing body is provided with an animal pattern.

As a further optimization for the above technical solution: the spray head includes a water spray rack connected to the upper end of the water spray pipe, at least two water spray joints are uniformly communicated with an outer edge of the water spray rack, each water spray joint is connected to a water spray sleeve, and a nozzle is disposed on the water spray sleeve.

As a further optimization for the above technical solution: the opening and closing cover includes a horn cover body, a support guide column facilitating opening and closing of the opening and closing body is disposed in the horn cover body, and an external threaded sleeve pipe threadedly connected to the water outlet end of the water source is disposed at a lower end of the cover body.

Compared with the prior art, this disclosure includes a water spray pipe detachably connected to a water outlet end of a water source. A spray head is connected to an upper end of the water spray pipe, and an opening and closing assembly matched with the water spray pipe for upward and downward linked opening and closing is connected to an outer wall of the water spray pipe in a matched manner. The outer wall of the water spray pipe is provided with a plurality of guide grooves facilitating upward and downward movement opening and closing of the opening and closing assembly, and the opening and closing assembly includes a guide assembly connected to the guide grooves in a matched manner. Through a matched connection between the guide assembly and the guide grooves, the spray head can spray water while a petal moves upward and downward in a linked manner for opening and closing. An overall structure is simple and reasonable, and a dynamic water spray effect can be provided, thereby improving an ornamental value.

### BRIEF DESCRIPTION OF THE DRAWINGS

FIG. 1 is a schematic structural diagram of this disclosure;
FIG. 2 is a schematic structural exploded view of this disclosure; and
FIG. 3 is a sectional view of this disclosure.

### DETAILED DESCRIPTION OF THE EMBODIMENTS

This disclosure is further described below in detail with reference to the accompanying drawings and embodiments.

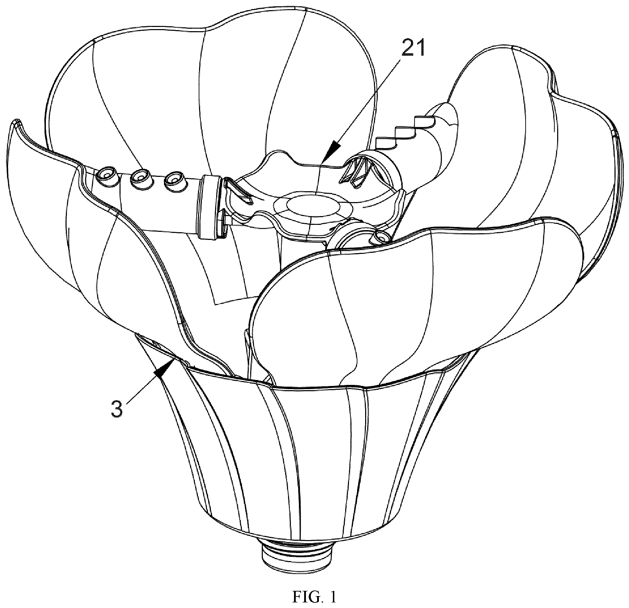

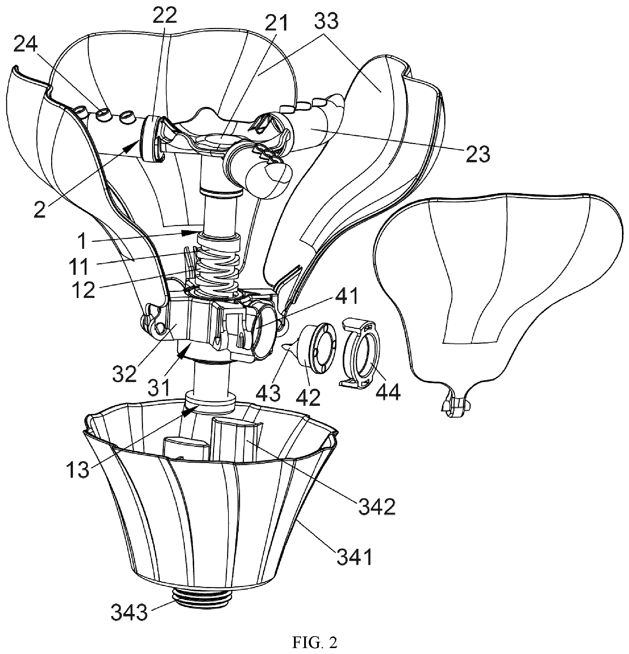

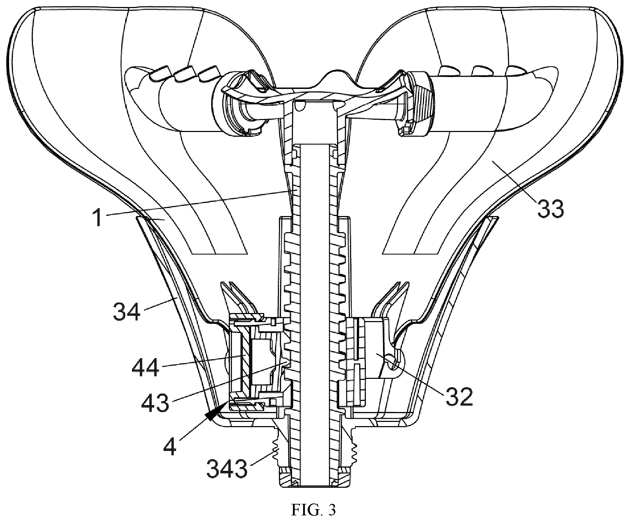

As shown in FIG. 1 to FIG. 3, a water sprayer includes a water spray pipe 1 detachably connected to a water outlet end of a water source, and a spray head 2 is connected to an upper end of the water spray pipe 1. An opening and closing assembly 3 matched with the water spray pipe 1 for upward and downward linked opening and closing is connected to an outer wall of the water spray pipe 1 in a matched manner, and the outer wall of the water spray pipe 1 is provided with a plurality of guide grooves 11 facilitating upward and downward movement opening and closing of the opening and closing assembly 3. The opening and closing assembly 3 includes a guide assembly 4 connected to the guide grooves 11 in a matched manner, and through a matched connection between the guide assembly 4 and the guide grooves 11, the spray head 2 can spray water while the opening and closing assembly 3 moves upward and downward in a linked manner for opening and closing. An overall structure is simple and reasonable, and a dynamic water spray effect can be provided, thereby improving an ornamental value.

In the embodiment, the opening and closing assembly 3 further includes an opening and closing base 31 connected to the outer wall of the water spray pipe 1. At least three pivot joints 32 are uniformly arranged on an outer wall of the opening and closing base 31, and each pivot joint 32 is movably connected to an opening and closing body 33 through a pivot shaft. The opening and closing body 33 is of a petal shape, a leaf shape, a wing shape, or another shape, and an inner wall of the opening and closing body 33 is provided with an animal pattern. In the embodiment, preferably, four pivot joints 32 are pivotally connected to four opening and closing bodies 33. An opening and closing cover 34 is disposed outside the opening and closing base 31 and the opening and closing body 33, a lower end of the opening and closing cover 34 is threadedly connected to the water outlet end of the water source, and the opening and closing cover 34 includes a horn cover body 341. A support guide column 342 facilitating opening and closing of the opening and closing body 33 is disposed in the horn cover body 341, an external threaded sleeve pipe 343 threadedly connected to the water outlet end of the water source is disposed at a lower end of the cover body, and the opening and closing cover 34 is threadedly connected and fixed to the water outlet end of the water source through the external threaded sleeve pipe 343. The four pivot joints 32 are pivotally connected to the four opening and closing bodies 33, so that after water flows through the water spray pipe 1, the water spray pipe rotates under the action of water pressure, and the opening and closing base 31 moves upward and downward while the water spray pipe 1 rotates. When the opening and closing base 31 moves upward, after a bottom end of the opening and closing body 33 is driven to move upward for a certain distance, since an upper end of the opening and closing body 33 is heavy, the opening and closing body 33 gradually opens under matching between the horn cover body 341 of the opening and closing cover 34 and the support guide column 342. When the opening and closing base 31 moves downward, the bottom end of the opening and closing body 33 is driven to move downward, so that the upper end of the opening and closing body 33 gradually closes under matching between the horn cover body 341 of the opening and closing cover 34 and the support guide column 342. An opening and closing angle of the opening and closing body 33 is from 5° to 150°. In this way, the spray head 2 is combined for spraying water, and a water spray range is 0.5 m to 15 m, so that the opening and closing assembly 3 has a dynamic effect, thereby beautifying the water spray effect and improving the ornamental value.

In the embodiment, the guide assembly 4 includes a guide hole 41 formed between two adjacent pivot joints 32. A guide sleeve 42 is disposed in the guide hole 41, the guide sleeve 42 is a wear-resistant nylon guide sleeve, and an arc-shaped guide piece 43 connected to the guide grooves 11 in a matched manner is disposed on an inner wall of the guide sleeve 42. The arc-shaped guide piece 43 may be made of a wear-resistant material, and an outer end of the guide hole 41 is detachably connected to a pressing cap 44 configured to fixedly press the guide sleeve 42 to prevent the arc-shaped guide piece 43 from moving backward. After the pressing cap 44 is opened, the guide sleeve 42 and the arc-shaped guide piece can be mounted and replaced. Two groups of staggered guide block 12 groups are formed on the outer wall of the water spray pipe 1, each group of guide block 12 groups includes a plurality of guide blocks 12, and each guide block 12 is of a structure that gradually widens from two ends to the middle portion (for example, a wedge shape or a trapezoid shape). The guide grooves 11 are formed between two adjacent guide blocks 12 and between the guide block 12 and two ends of the water spray pipe 1. A sealing ring 13 connected to the water outlet end of the water source in a sealing manner is sleeved at a bottom end of the water spray pipe 1, the spray head 2 includes a water spray rack 21 connected to the upper end of the water spray pipe 1, and at least two water spray joints 22 are uniformly communicated with an outer edge of the water spray rack 21. Each water spray joint 22 is connected to a water spray sleeve 23, and nozzles 24 are disposed on the water spray sleeve. In the embodiment, preferably, three water spray joints 22 are disposed, and nozzles on the three water spray joints 22 are configured to spray water in a direction at an angle. In this way, reverse thrust is formed, thereby facilitating rotary water spraying of the water spray rack 21, the water spray joints 22, and the nozzles 24.

During use, the water spray pipe 1 is first inserted into the water outlet end of the water source through the sealing ring 13. After water flows through the water spray pipe 1, the water spray pipe is driven to rotate under a counter-acting force obtained after the spray head 2 sprays water. The water spray pipe 1 is under matching between the arc-shaped guide piece 43 and the guide grooves 11 formed between the two adjacent guide blocks 12 and between the guide block 12 and the two ends of the water spray pipe 1, so that the opening and closing base 31 moves upward and downward while the water spray pipe 1 rotates. When the arc-shaped guide piece 43 rotatably moves to the guide grooves 11 formed between the guide block 12 and the two ends of the water spray pipe 1, since the guide block 12 is of the structure that gradually widens from the two ends to the middle portion, the guide grooves 11 are of a structure that is wide at two ends and narrow in the middle. In this way, when the arc-shaped guide piece 43 moves to touch end surfaces of the guide grooves 11 formed between the guide block 12 and the two ends of the water spray pipe 1, the arc-shaped guide piece 43 and the opening and closing base 31 automatically move in an opposite direction. In this way, when the water spray pipe 1 rotates under pressure, the opening and closing base 31 may automatically adjust the movement in a linked manner upward and downward. The overall structure is simple and reasonable, which can effectively improve the water spray effect.

The above provides a detailed description of the preferred embodiments of this disclosure. It should be understood that those skilled in the art can make many modifications and changes according to the concept of this disclosure without creative efforts. Therefore, any technical solution that can be obtained by those skilled in the art according to the concept of this disclosure through logical analysis, logical inference, or limited experiments on the basis of the prior art shall fall within the scope of protection of this disclosure.

## Claims

1. A water sprayer, comprising a water spray pipe detachably connected to a water outlet end of a water source, wherein a spray head is connected to an upper end of the water spray pipe, an opening and closing assembly matched with the water spray pipe for upward and downward linked opening and closing is connected to an outer wall of the water spray pipe in a matched manner, the outer wall of the water spray pipe is provided with a plurality of guide grooves facilitating upward and downward movement opening and closing of the opening and closing assembly, and the opening and closing assembly comprises a guide assembly connected to the guide grooves in a matched manner.

2. The water sprayer according to claim 1, wherein the opening and closing assembly further comprises an opening and closing base connected to the outer wall of the water spray pipe, at least three pivot joints are uniformly arranged on an outer wall of the opening and closing base, each pivot joint is movably connected to an opening and closing body through a pivot shaft, an opening and closing cover is disposed outside the opening and closing base and the opening and closing body, and a lower end of the opening and closing cover is threadedly connected to the water outlet end of the water source.

3. The water sprayer according to claim 2, wherein the guide assembly comprises a guide hole formed between two adjacent pivot joints, a guide sleeve is disposed in the guide hole, an arc-shaped guide piece connected to the guide grooves in a matched manner is disposed on an inner wall of the guide sleeve, and an outer end of the guide hole is detachably connected to a pressing cap configured to fixedly press the guide sleeve to prevent the arc-shaped guide piece from moving backward.

4. The water sprayer according to claim 3, wherein two groups of staggered guide block groups are formed on the outer wall of the water spray pipe, each group of guide block groups comprises a plurality of guide blocks, each guide block is of a structure that gradually widens from two ends to a middle portion, the guide grooves are formed between two adjacent guide blocks and between the guide block and two ends of the water spray pipe, and a sealing ring connected to the water outlet end of the water source in a sealing manner is sleeved at a bottom end of the water spray pipe.

5. The water sprayer according to claim 2, wherein the opening and closing body is of a petal shape, a leaf shape, or a wing shape, and an inner wall of the opening and closing body is provided with an animal pattern.

6. The water sprayer according to claim 1, wherein the spray head comprises a water spray rack connected to the upper end of the water spray pipe, at least two water spray joints are uniformly communicated with an outer edge of the water spray rack, each water spray joint is connected to a water spray sleeve, and a nozzle is disposed on the water spray sleeve.

7. The water sprayer according to claim 2, wherein the opening and closing cover comprises a horn cover body, a support guide column facilitating opening and closing of the opening and closing body is disposed in the horn cover body, and an external threaded sleeve pipe threadedly connected to the water outlet end of the water source is disposed at a lower end of the cover body.
